# EUROPÄISCHE PATENTSCHRIFT

(11) **EP 0 427 098 B1**
(45) Veröffentlichungstag und Bekanntmachung des Hinweises auf die Patenterteilung: **25.01.1995**
(21) Anmeldenummer: 90120857.9
(22) Anmeldetag: 31.10.1990
(51) Int. Cl.: B32B 27/28, B32B 27/12, C08G 63/66

(54) **Formteil aus Schaumkunststoff sowie seine Herstellung**
Moulding of foam plastic and its manufacture
Pièce moulée en matière plastique mousse et sa fabrication

(30) Priorität: 07.11.1989 DE 3937107
(43) Veröffentlichungstag der Anmeldung: 15.05.1991
(73) Patentinhaber: Akzo Nobel N.V., 6824 BM Arnhem (NL)
(72) Erfinder: van de Ven, Henricus Joannes Maria, NL-6825 CT Arnhem (NL); de Haan, Erik, NL-6843 WH Arnhem (NL)
(74) Vertreter: Schalkwijk, Pieter Cornelis

(56) Entgegenhaltungen:
- EP-A- 0 027 587
- EP-A- 0 035 769
- EP-A- 0 111 360
- EP-A- 0 349 962
- DE-C- 3 506 230
- Becker/Braun, KUNSTSTOFF-HANDBUCH, Bd. 7-'Polyurethane' (1983), Carl Hanser Verlag, p. 224

## Beschreibung

Die Erfindung bezieht sich auf ein Formteil aus Schaumkunststoff mit integriertem, ohne Zusatz eines Bindemittels und ohne Schmelzverklebung vollflächig mit dem Schaumkunststoff verbundenem Bezug ohne Zusatz eines Bindemittels und ohne Schmelzverklebung sowie seine Herstellung durch Umformen einer Bezugsstoffbahn und anschließende Verschäumung.

Die Erfindung betrifft also konkret Gegenstände wie formverschäumte Matratzen und Polster für Möbel sowie Fahrzeuge, insbesondere Auto-Sitze und Flugzeugsessel.

Unter "Formteil aus Schaumkunststoff" wird ein in Werkzeugen geformter Gegenstand aus verfestigtem Schaum von synthetischen Polymeren verstanden.

Unter "integriertem Bezug" wird ein vollflächig mit dem Schaumkunststoff verbundener Bezug verstanden, so wie er beim Formschäumen entsteht, also ohne Zusatz eines Bindemittels und ohne Schmelzverklebung zweier vorgefertigter Festkörper.

Unter "Umformen" wird die Deformation einer Bezugsstoffbahn unter Einfluß von äußeren Kräften und evtl. von Wärme in einem Werkzeug verstanden.

Beim "Verschäumen" geht man bevorzugt von flüssigen Ausgangsstoffen zur Polyurethan-Herstellung aus. Das schaumfähige Gemisch wird in den umgeformten Bezug eingefüllt. Schon während der Entstehung wird der sich bildende Kunststoff in die Zellstruktur (Schaum) überführt und mit dem Bezug verbunden.

Es sind Formteile aus Schaumkunststoff mit integriertem Bezug bekannt.

Aus der DE-A 22 27 143 sind Sitzpolster aus Schaumkunststoff bekannt, die einen dehnbaren textilen Überzug mit einer Versiegelungs-Schicht aus einem Elastomeren haben, wobei der Schaumkunststoff in situ nach einer Kaltschaumrezeptur hergestellt wurde. Die Versiegelungsschicht besteht vorzugsweise aus einem thermoplastischen Polyurethan-Elastomer oder aus einer Schicht aus weichgemachtem Polyvinylchlorid, die zur Schaumstoffseite hin z.B. mit einem Polyurethan-Lösungsauftrag versehen ist (s. Seite 4, Absatz 2 sowie Seite 5, letzter Absatz). Zusätzlich kann zwischen dem textilen Überzug und der Versiegelungs-Schicht aus einer Folie eine Polyurethan-Weichschaumstoffolie angeordnet sein. Ein derartiges Laminat wird mit Vakuum verformt. Der entstehende Hohlraum wird dann verschäumt.

Auch in der Zeitschrift "Gummi-Asbest-Kunststoffe" Nr. 10, 1972 werden auf den Seiten 923 bis 926 gattungsgemäße Formteile aus Schaumkunststoff beschrieben. Sie wurden aus mit Polyurethan und Polyvinylchlorid versiegelten textilen Flächengebilden durch Umformen und Hinterschäumen hergestellt.

In der DE-C 35 06 230 werden Sitze und Rückenlehnenpolster beschrieben, die durch Vakuum-Umformung und Hinterschäumung eines luftdurchlässigen Bezugs und einer luftundurchlässigen Folie hergestellt wurden, wobei der Bezug und die Folie erst beim Umformen miteinander verbunden werden. Die Folie soll dehnbar und klebefähig sein (siehe Spalte 2, Zeilen 56 und 57); es wird nicht gesagt, aus welchem Polymeren sie bestehen soll.

In der GB-A 20 06 667 wird die Herstellung von Bezügen für Polster beschrieben, z.B. für Autositze, Stühle, Möbel und Betten. Bei den Bezügen handelt es sich um Laminate mit einer Textil-Schicht, einer Kunststoffschaum-Schicht sowie evtl. einer thermoplastischen Folie. Letztere kann aus Polyvinylchlorid, Polyethylen oder Polyurethan hergestellt sein (siehe Seite 3, Zeilen 11-15). Das Laminat wird mechanisch umgeformt (s. Anspruch 1, Seite 2, Zeilen 26-28), und zwar vorzugsweise bei 150 bis 220°C. Es kann dann entweder mit dem separat hergestellten Schaumkunststoff zusammengebracht werden oder es kann hinterschäumt werden, (siehe Seite 2, Zeilen 8-13).

Die bekannten Formteile genügen den Anforderungen an die Gebrauchseigenschaften nicht immer, insbesondere ist ihre Schwindung groß und/oder die Bindung der Schichten des Bezugs untereinander sowie mit dem Schaumkunststoff ist unbefriedigend klein.

Hier will die Erfindung Abhilfe schaffen. Es sollen möglichst formgetreue Formteile aus Schaumkunststoff mit faltenfreiem fest verbundenem Bezug zur Verfügung gestellt werden. Außerdem galt es diese Eigenschaften in einem einfachen und billigen Verfahren zu verwirklichen.

Die erfindungsgemäße Lösung ist den Patentansprüchen zu entnehmen.

Unter "Laminat" werden mehrere miteinander verbundene Schichten verstanden. Die Bindung kann z.B. mit oder ohne Bindemittel, voll- oder teilflächig sein.

Unter "Schicht" wird ein in flächenhafter Ausdehnung in einer gewissen Höhe über, unter oder zwischen anderen liegende einheitliche Masse verstanden. Dabei kann es sich z.B. um eine Folie, ein Textil oder eine Paste handeln.

Zu der erfindungsgemäßen Lösung trug entscheidend die Auswahl des Copolyetheresters bei, der aus einer Vielzahl von wiederkehrenden intralinearen langkettigen Estereinheiten und kurzkettigen Estereinheiten besteht, die statistisch Kopfende-an-Hinterende durch Esterbrücken verbunden sind, wobei die langkettigen Estereinheiten der Formel

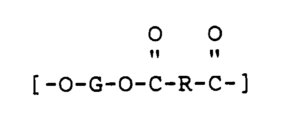

und die kurzkettigen Estereinheiten der Formel 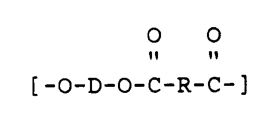
entsprechen, worin G ein zweiwertiger Rest ist, der durch Entfernung von endständigen Hydroxylgruppen mindestens eines langkettigen Glycols entsteht, das ein Molekulargewicht im Bereich von 800 bis 6000 besitzt und ein Atomverhältnis von Kohlenstoff zu Sauerstoff im Bereich von 2,0 bis 4,3 besitzt, wobei mindestens 15 Gew.% des langkettigen Glycols ein Kohlenstoff : Sauerstoff-Verhältnis im Bereich von 2,0 bis 4,0 aufweisen, R ein zweiwertiger Rest ist, der durch Entfernung von Carboxylgruppen mindestens einer Dicarbonsäure mit einem Molekulargewicht von weniger als 300 entsteht, und D ein zweiwertiger Rest ist, welcher durch Entfernung von Hydroxylgruppen mindestens eines Diols entsteht, das ein Molekulargewicht von weniger als 250 besitzt, wobei mindestens 80% der verwendeten Dicarbonsäure aus Terephthalsäure oder einem esterbildenden Äquivalent hiervon und mindestens 80 Mol% des niedermolekularen Diols aus 1,4-Butandiol oder einem esterbildenden Äquivalent hiervon bestehen, wobei die Summe der Molprozente der Dicarbonsäure, die nicht Terephthalsäure oder deren esterbildendes Äquivalent ist, und des niedermolekularen Diols, das nicht 1,4-Butandiol oder dessen esterbildendes Äquivalent ist, nicht größer als 20 ist und die kurzkettigen Estereinheiten 40 bis 85 Gew.% des Copolyätheresters bilden. Vorteilhaft ist es, wenn mindestens 15 Gew.% des langkettigen Glycols ein Kohlenstoff : Sauerstoff-Verhältnis im Bereich von 2,0 bis 2,7 aufweisen. Insbesondere die Auswahl der Folie mit einer Dicke von 5 bis 50 µm, vorzugsweise 10 bis 30 µm, insbesondere 20 bis 30 µm, aus einem Copolyetherester mit 15 bis 50 Gew.% Polyethylenglykol (PEG)-Anteil als langkettigem Glykol, bezogen auf die Summe der Mengen an langkettigem Glykol und kurzkettigem Ester (PBT) plus 1 Mol Terephthalat ist von Vorteil. Vorteilhafterweise beträgt der Anteil an PEG 15 bis 33 Gew.%. Eine vorteilhafte Ausführungsform der Erfindung betrifft schließlich das daraus hergestellte Laminat mit einer zusätzlichen textilen Schicht und/oder mit einer Polyurethanweichschaum-Folie. Bevorzugt verwendet man bei der Herstellung des Laminats eine Polyurethanweichschaumfolie mit einer Dicke von 3 bis 12 mm. Die Dicke dieser Schicht im fertigen Laminat kann je nach Herstellungsbedingungen niedriger sein, z.B. im Bereich von 1,5 bis 6 mm.

Bevorzugte Ausführungsformen sind durch folgende Merkmale gekennzeichnet, sowohl einzeln als auch in Kombination mehrerer Merkmale:
- Das Laminat enthält eine Textil-Schicht und/oder eine Schaumkunststoff-Schicht und die Copolyetherester-Schicht in der genannten Reihenfolge. Es ist aber auch ein zweischichtiges Laminat z.B. aus dem Textil und dem Copolyetherester möglich.
- Der Copolyetherester weist bevorzugt einen Polyethylenglykol-Anteil (PEG) von 15 bis 50 Gew.-% auf, bezogen auf die Summe der Menge an langkettigem Glycol (PEG) und kurzkettigem Ester (PBT) plus 1 Mol Terephthalat.
- Die Copolyetherester-Schicht kann zwar auch durch Beschichten oder Imprägnieren des Textils bzw. der Schaumkunststoff-Schicht mit einer entsprechenden Lösung, Paste oder Dispersion erhalten werden, vorzuziehen ist es aber, eine entsprechende Folie aus Copolyetherester aufzukaschieren.
- Die Folie sollte eine Dicke von 10 bis 30 µm haben, vorzugsweise von 20 bis 30 µm. Sie kann zwar auch dünner oder dicker sein; jedoch werden dann nicht ganz so günstige Ergebnisse erhalten. Die Folie kann umso dünner sein, je gleichmäßiger ihre Dicke ist.
- Als Textil eignet sich neben Geweben und Vliesen insbesondere Maschenware. Es kann aus vollverstreckten, aber auch aus teilverstreckten oder gar unverstreckten Endlosfäden hergestellt sein. Es kann auch Flockware eingesetzt werden.
- Die Schaumkunststoff-Schicht ist vorzugsweise eine Polyurethan-Weichschaumfolie. Sie wird vorzugsweise durch Flammkaschieren mit der Folie auf der einen Seite sowie ggf. mit dem Textil auf der anderen Seite so verbunden, daß dabei eine stellenweise Verklebung über die gesamte Bahn erreicht wird.
- Die Umformung kann zwar auch mechanisch mit einem Stempel erfolgen, vorzuziehen ist es aber, mit Überdruck oder Vakuum in geeigneten Form-Werkzeugen umzuformen. Letzeres (Vakuum-Methode) ist vorzuziehen.

Die Umformung kann bei Raumtemperatur oder etwas erhöhter Temperatur, z.B. bei bis zu 50°C erfolgen. Die anzuwendende Temperatur richtet sich zweckmäßigerweise nach den Bedingungen der Verschäumung.

Die erfindungsgemäß hinterschäumte Schicht aus dem Copolyetherester zeichnet sich durch folgende Eigenschaften aus:
- Sie ist überraschend fest sowohl mit der Polyurethan-Weichschaum-Folie als auch mit dem Polyurethan-Schaumstoff-Kern verbunden.
- Sie führt überraschend zu formgetreuen Formlingen sogar unter milden Herstellungsbedingungen wie niedrige Temperatur, Vakuum und kurze Zeiten. Die Differenz bezüglich Dimensionen zwischen Werkzeugmaß und entsprechendem Formteil direkt nach der Entfernung des Formteils aus dem Formwerkzeug (Verarbeitungs-Schwindung) ist sehr klein.
- Auch wenn bei der Herstellung starke Verdehnungen von z.B. 50% angewandt werden, schlägt das PUR-Reaktionsgemisch durch das Laminat nicht durch, und zwar trotz der relativ geringen Dicke.
- Sie ist wasser- und luft-undurchlässig aber wasserdampfdurchlässig. Damit wird sowohl ein hoher Gebrauchskomfort erzielt, als auch eine leichte Reinigung ermöglicht.

Dementsprechend sind folgende Formteile aus Schaumkunststoff mit integriertem Bezug von besonderer Bedeutung: Matratzen für Hotels und Krankenhäuser sowie insbesondere Sitze für Fahrzeuge wie Flugzeug, Bahn und Auto. Sie lassen sich leicht mit einem ausgeprägten Profil herstellen, sind pflegeleicht, da Wasser nur die Oberfläche anfeuchtet, und sind außerdem auch noch wasserdampfdurchlässig. Bei den Sitzen ist auch ein dauerhafter faltenfreier Bezug wichtig.

Ganz allgemein können die erfindungsgemäß hinterschäumten Laminate mit einer Copolyetherester-Schicht folgendermaßen hergestellt werden (siehe auch "Gummi-Asbest-Kunststoffe" Nr. 10, 1972, Seiten 923 bis 926):

Die Herstellung von geeigneten Copolyetherestern ist in der EP-A 0 111 360 beschrieben. Diese Copolyetherester besitzen gute Hydrolysestabilität. Die EP-A 0 111 360 wird hiermit ausdrücklich voll in diese Beschreibung einbezogen. Auch die Folien-Herstellung ist dort beschrieben.

Als Textil wird in der Regel ein Gewebe oder eine Maschenware eingesetzt, z.B. aus Fasern oder Filamenten von vollsynthetischen Polymeren, insbesondere aus Polyethylenterephthalat oder Polyamid 6 oder 66. Es können auch Elastomerfäden verwendet werden.

Die ggf. bei der Herstellung der Formteile verwendete Polyurethan-Weichschaumfolie hat vorzugsweise eine Dicke von 3 bis 12 mm. Sie wird nach allgemein bekannten Verfahren hergestellt.

Das Laminat aus der Copolyetherester-Folie, dem Textil und/oder der Weichschaumfolie wird in der Regel durch Flammkaschierung hergestellt. Dabei sollen nur die Oberflächen der Schaum-Zellstege angeschmolzen werden, so daß eine stellenweise Verklebung über die ganze Fläche erreicht wird. Daher bleiben trotz guter Bindung Elastizität, Weichheit und Durchlässigkeit erhalten.

Das Laminat wird nach bekannter Art mit Vakuum in geeigneten Formwerkzeugen vorzugsweise bei erhöhter Temperatur umgeformt. Ein derartiges Verfahren ist z.B. in DE 35 06 230 und DE 36 13 879 beschrieben.

Der umgeformte Bezug wird nun vorzugsweise nach dem Kaltschaumverfahren mit Form-Temperaturen zwischen 30 und 60°C in bekannter Weise verschäumt, wobei flüssige Ausgangsstoffe zur Polyurethanherstellung in den entstandenen Hohlraum eingegossen werden, s. Kirk-Othmer, Encyclopedia of Chemical Technology, second edition, Vol. 21, Seiten 84 bis 94 (19) oder Becker/Braun, Kunststoff Handbuch, Band 7 (Polyurethane) Hauser, Verlag München, Wien (1983).

### Beispiel

Es wird eine 25 µm dicke Folie aus Copolyetherester mit 30% PEG vom Molekulargewicht 4 000 hergestellt. Diese erfindungsgemäß anwendbare Folie a) wird mit einer bekannten 53 µm dicken Folie b) aus Polyurethan vom Typ U 03 der Fa. Plate, Bonn, verglichen.

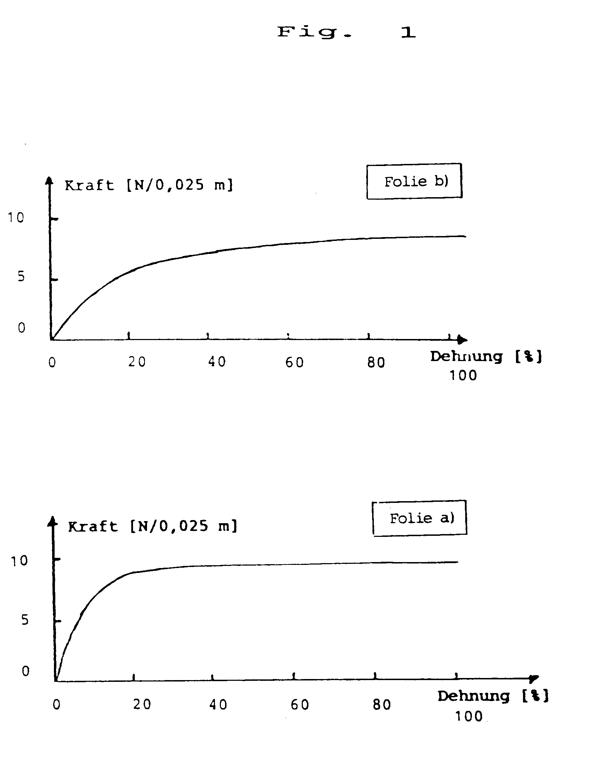

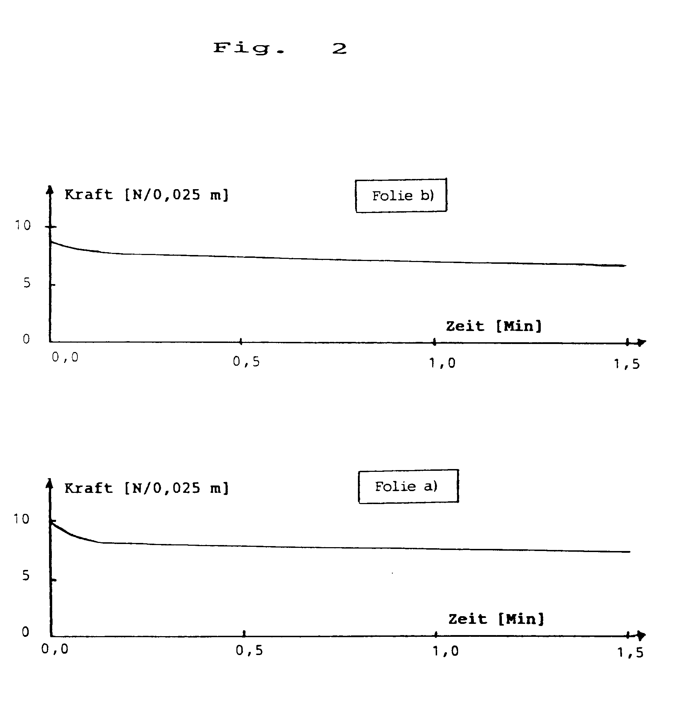

Das Kraft-Dehnungsverhalten beider Folien wurde anhand von 200 x 25 mm Streifen untersucht (Einspannlänge 50 mm; Verstreckung 100% mit einer Geschwindigkeit von 5 cm/Min.; 20°C; Instron-Zugvorrichtung). Die erhaltenen Diagramme sind in der Zeichnung (Figur 1) wiedergegeben. Demnach ist es schwerer, die erfindungsgemäße Folie a) zu verstrecken als die bekannte PU-Folie b). Auch die Rückstellkraft (Figur 2) der erfindungsgemäßen Folie a) ist mit 7,0 N größer als bei der bekannten PU-Folie b) mit 6,6 N nach 1,5 Min. Verweilzeit. Aus diesen beiden Gründen war für das Laminat mit der Copolyetheresterfolie a) eine größere Differenz zwischen den Dimensionen von Formteil und dem Formwerkzeug zu erwarten als im Falle der bekannten Folie b). Das Gegenteil wird aber beobachtet, wenn man die Folie mit einer PU-Weichschaumfolie (Enddicke 2 mm) sowie mit einem Wirkvelours mit einer zusätzlichen Kette aus Elastomerfäden Lycra^{R} (Typ Frontier), dann das so erhaltene Laminat bei 40-45°C Form-Werkzeug-Temperatur mit Vakuum umformt, anschließend bei 40-45°C 4 Minuten mit Polyol/Diisocyanat und Treibgas (Reaktionsgemisch zur PU-Herstellung) verschäumt und schließlich nach 5 Minuten aus dem Formwerkzeug entnimmt.

Trotz der relativ geringen Dicke ist das Schaumgemisch nicht durch den Bezug durchgeschlagen.

Die Bindung der Copolyetherester-Folie sowohl an die Polyurethan-Weichschaumfolie als auch an den Polyurethan-Schaumstoff-Kern ist unerwartet fest.

## Patentansprüche

1. Formteil aus Schaumkunststoff mit integriertem, ohne Zusatz eines Bindemittels und ohne Schmelzverklebung vollflächig mit dem Schaumkunststoff verbundenem Bezug ohne Zusatz eines Bindemittels und ohne Schmelzverklebung aus einem Laminat mit einer Schicht aus einem Copolyetherester, der aus einer Vielzahl von wiederkehrenden intralinearen langkettigen Estereinheiten und kurzkettigen Estereinheiten besteht, die statistisch Kopfende-an-Hinterende durch Esterbrücken verbunden sind, wobei die langkettigen Estereinheiten der Formel 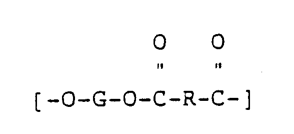 und die kurzkettigen Estereinheiten der Formel 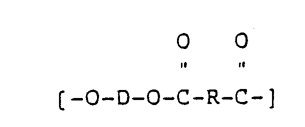 entsprechen, worin G ein zweiwertiger Rest ist, der durch Entfernung von endständigen Hydroxylgruppen mindestens eines langkettigen Glycols entsteht, das ein Molekulargewicht im Bereich von 800 bis 6000 besitzt und ein Atomverhältnis von Kohlenstoff zu Sauerstoff im Bereich von 2,0 bis 4,3 besitzt, wobei mindestens 15 Gew.% des langkettigen Glykols ein Kohlenstoff : Sauerstoff-Verhältnis im Bereich von 2,0 bis 4,0 aufweisen, R ein zweiwertiger Rest ist, der durch Entfernung von Carboxylgruppen mindestens einer Dicarbonsäure mit einem Molekulargewicht von weniger als 300 entsteht, und D ein zweiwertiger Rest ist, welcher durch Entfernung von Hydroxylgruppen mindestens eines Diols entsteht, das ein Molekulargewicht von weniger als 250 besitzt, wobei mindestens 80% der verwendeten Dicarbonsäure aus Terephthalsäure oder einem esterbildenden Äquivalent hiervon und mindestens 80 Mol% des niedermolekularen Diols aus 1,4-Butandiol oder einem esterbildenden Äquivalent hiervon bestehen, wobei die Summe der Molprozente der Dicarbonsäure, die nicht Terephthalsäure oder deren esterbildendes Äquivalent ist, und des niedermolekularen Diols, das nicht 1,4-Butandiol oder dessen esterbildendes Äquivalent ist, nicht größer als 20 ist und die kurzkettigen Estereinheiten 40 bis 85 Gew.% des Copolyätheresters bilden.

2. Formteil gemäß Anspruch 1, dadurch gekennzeichnet, daß mindestens 15 Gew.-% des langkettigen Glykols ein Kohlenstoff : Sauerstoff-Verhältnis im Bereich von 2,0 bis 2,7 aufweisen.

3. Formteil gemäß Anspruch 1 oder 2, dadurch gekennzeichnet, daß das langkettige Glycol Polyäthylenglycol (PEG) ist und daß sein Anteil 15 bis 50 Gew.-% bezogen auf die Summe der Menge an langkettigem Glycol (PEG)und kurzkettigen Estereinheiten (PBT) plus 1 Mol Terephthalt, beträgt.

4. Formteil gemäß Anspruch 3, dadurch gekennzeichnet, daß der Anteil an PEG 15 bis 33 Gew.-% beträgt.

5. Formteil gemäß einem oder mehreren der Ansprüche 1 bis 4, dadurch gekennzeichnet, daß die Schicht aus Copolyätherester eine Folie mit einer Dicke von 5 bis 50 µm ist, vorzugsweise von 10 bis 30 µm, insbesondere von 20 bis 30 µm.

6. Formteil gemäß einem oder mehreren der Ansprüche 1 bis 5, dadurch gekennzeichnet, daß die Schicht aus Copolyätherester Bestandteil eines Laminates ist mit zusätzlich einer Textil-Schicht und/oder einer Schaumkunststoff-Schicht.

7. Formteil gemäß einem oder mehreren der vorhergehenden Ansprüche, dadurch gekennzeichnet, daß es ein Autositz oder eine Matratze ist.

8. Herstellung des Formteils nach einem oder mehreren der vorhergehenden Ansprüche gekennzeichnet durch Umformen einer Bezugsstoffbahn und Verschäumen der entstehenden Form.

9. Herstellung des Formteils nach Anspruch 8, gekennzeichnet durch eine Vakuum-Umformung.

## Claims

1. A moulded article of foamed plastic with an integrated covering which is bonded to the foamed plastic over the entire surface without the addition of a binder and without melt bonding, made up of a laminate containing a layer of copolyetherester made up of a multiplicity of recurring intralinear long-chain ester units and short-chain ester units connected randomly head-to-tail by ester bridges, the long-chain ester units corresponding to the formula 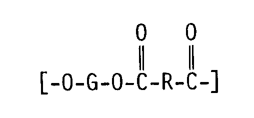 and the short-chain ester units corresponding to the formula 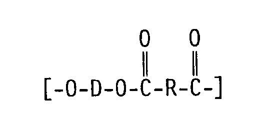 wherein G is a divalent radical produced by removing terminal hydroxyl groups from at least one long-chain glycol which has a molecular weight in the range of 800 to 6000 and an atomic ratio of carbon to oxygen of 2,0 to 4,3, with at least 15 wt.% of the long-chain glycol having a carbon:oxygen ratio in the range of 2,0 to 4,0; R is a divalent radical produced by removing carboxyl groups from at least one dicarboxylic acid having a molecular weight of less than 300; and D is a divalent radical produced by removing hydroxyl groups from at least one diol having a molecular weight of less than 250, with at least 80% of the dicarboxylic acid employed being made up of terephthalic acid or an ester-forming equivalent thereof and at least 80 mole% of the low-molecular weight diol being made up of 1,4-butane diol or an ester-forming equivalent thereof, with the sum of the mole percentages of dicarboxylic acid which is not terephthalic acid or an ester-forming equivalent thereof and of the low-molecular weight diol which is not 1,4-butane diol or the ester-forming equivalent thereof being not more than 20, and the short-chain ester units forming 40 to 85 wt.% of the copolyetherester.

2. A moulded article according to claim 1, characterised in that at least 15% of the long-chain glycol has a carbon:oxygen ratio in the range of 2,0 to 2,7.

3. A moulded article according to claim 1 or 2, characterised in that the long-chain glycol is polyethylene glycol (PEG) and the proportion thereof is 15 to 50 wt.%, calculated on the sum of the amounts of long-chain glycol (PEG) and short-chain ester units (PBT) plus 1 mole of terephthalate.

4. A moulded article according to claim 3, characterised in that the proportion of PEG is 15 to 33 wt.%.

5. A moulded article according to one or more of claims 1-4, characterised in that the layer of copolyetherester is a film having a thickness of 5 to 50 µm, preferably 10 to 30 µm, more particularly 20 to 30 µm.

6. A moulded article according to one or more of claims 1-5, characterised in that the layer of copolyetherester is part of a laminate which additionally contains a textile layer and/or a foamed plastic layer.

7. A moulded article according to one or more of the preceding claims, characterised in that it is a car seat or a mattress.

8. Manufacture of the moulded article according to one or more of the preceding claims, characterised by shaping a length of cover material and foaming the resulting shape.

9. Manufacture of a moulded article according to claim 8, characterised by shaping with vacuum.

## Revendications

1. Pièce moulée en mousse de matière plastique enfermée dans un revêtement intégré, liée par toute sa surface avec la mousse de matière plastique sans addition de liants et sans collage par fusion, à partir d'un stratifié comportant une couche en copolyétherester, qui est constitué d'une pluralité de motifs ester à longue chaîne et de motifs ester à courte chaîne intralinéaires répétitifs qui sont liés statistiquement en tête à queue par des ponts ester, les motifs ester à longue chaîne répondant à la formule : 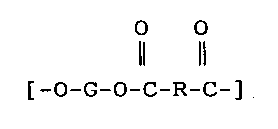 et les motifs ester à chaîne courte répondant à la formule : 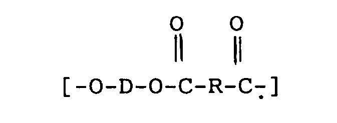 G étant un radical divalent qui est formé par l'élimination de groupes hydroxyles terminaux d'au moins un glycol à longue chaîne dont le poids moléculaire est compris entre 800 et 6 000 et dont le rapport atomique du carbone à l'oxygène est compris entre 2,0 et 4,3, au moins 15% en poids du glycol à longue chaîne présentant un rapport carbone : oxygène compris entre 2,0 et 4,0, R étant un radical divalent formé par élimination des groupes carboxyles d'au moins un acide dicarboxylique dont le poids moléculaire est inférieur à 300, et D étant un radical divalent formé par élimination de groupes hydroxyles d'au moins 1 diol dont le poids moléculaire est inférieur à 250, au moins 80% de l'acide dicarboxylique utilisé étant constitué d'acide téréphtalique ou d'un des équivalents précurseurs d'ester et au moins 80% en mole du diol de bas poids moléculaire étant constitué de 1,4-butanediol ou d'un de ses équivalents précurseurs d'ester, la somme des pourcentages molaires de l'acide dicarboxylique qui ne soit pas de l'acide téréphtalique ni un de ses équivalents précurseurs d'ester et du diol de bas poids moléculaire qui ne soit pas du 1,4-butane-diol ni un de ses équivalents précurseurs d'ester n'étant pas supérieur à 20 et les motifs ester à chaîne courte formant de 40 à 85% en poids du copolyétherester.

2. Pièce moulée selon la revendication 1 caractérisée en ce que au moins 15% en poids du glycol à longue chaîne présente un rapport carbone:oxygène compris entre 2,0 et 2,7.

3. Pièce moulée selon la revendication 1 ou 2 caractérisée en ce que le glycol à longue chaîne est le polyéthylène glycol (PEG) et que sa proportion atteint de 15 à 50% en poids par rapport à la somme des quantités de glycols à longue chaîne (PEG) et de motifs ester à chaîne courte (PBT) plus 1 mole de téréphtalate.

4. Pièce moulée selon la revendication 3 caractérisée en ce que la proportion de PEG atteint de 15 à 33% en poids.

5. Pièce moulée selon l'une quelconque des revendications 1 à 4 caractérisée en ce que la couche en polyester est une feuille d'une épaisseur de 5 à 50 µm, de préférence 10 à 30 µm, plus particulièrement 20 à 30 µm.

6. Pièce moulée selon l'une ou plusieurs des revendications 1 à 5 caracterisée en ce que la couche de copolyétherester est le constituant d'un stratifié comportant en outre une couche textile et/ou une couche de matière plastique expansée.

7. Pièce moulée selon l'une ou plusieurs des revendications précédentes caractérisée en ce qu'elle est un siège de voiture ou un matelas.

8. Fabrication de la pièce moulée selon l'une ou plusieurs des revendications précédentes caractérisée en ce que l'on effectue la conformation d'une bande de matière de revêtement et on remplit de mousse le revêtement correspondant.

9. Préparation de la pièce moulée selon la revendication 8 caractérisée en ce que la conformation est faite sous vide.
